(19) Europäisches Patentamt
European Patent Office
Office européen des brevets

(11) **EP 2 727 235 B1**

(12) **EUROPÄISCHE PATENTSCHRIFT**

(45) Veröffentlichungstag und Bekanntmachung des Hinweises auf die Patenterteilung:
**25.03.2015 Patentblatt 2015/13**

(21) Anmeldenummer: **12726601.3**

(22) Anmeldetag: **22.05.2012**

(51) Int Cl.:
*H02M 7/5387* (2007.01)     *H02P 6/00* (2006.01)
*H02M 1/00* (2007.01)     *H02P 9/30* (2006.01)

(86) Internationale Anmeldenummer:
**PCT/EP2012/059480**

(87) Internationale Veröffentlichungsnummer:
**WO 2013/000632 (03.01.2013 Gazette 2013/01)**

(54) **VERFAHREN UND VORRICHTUNG ZUR MESSUNG VON PHASENSTROMANGABEN UND EINER ERREGERSTROMANGABE IN EINER ELEKTRISCH ERREGTEN ELEKTRISCHEN MASCHINE**

METHOD AND DEVICE FOR MEASURING PHASE CURRENT PROFILES AND A EXCITER CURRENT PROFILE IN AN ELECTRICALLY EXCITED ELECTRICAL MACHINE

PROCÉDÉ ET DISPOSITIF DE MESURE D'INDICATIONS DE COURANT DE PHASE ET D'UNE INDICATION DE COURANT D'EXCITATION DANS UN MOTEUR ÉLECTRIQUE À EXCITATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2011 DE 102011078155**

(43) Veröffentlichungstag der Anmeldung:
**07.05.2014 Patentblatt 2014/19**

(73) Patentinhaber: **Robert Bosch GmbH**
**70442 Stuttgart (DE)**

(72) Erfinder:
• **NEUBURGER, Martin**
**73312 Geislingen (DE)**
• **RIEGER, Vincent**
**76227 Karlsruhe (DE)**

(56) Entgegenhaltungen:
**EP-A2- 0 310 858     EP-A2- 1 617 555**
**US-A- 6 049 474**

EP 2 727 235 B1

**Beschreibung**

Technisches Gebiet

Die vorliegende Erfindung betrifft fremderregte bzw. hybriderregte (elektrisch erregte) elektrische Maschinen und insbesondere Verfahren zur Messung von Phasen- und Erregerströmen in einer elektrischen Maschine.

Stand der Technik

Bei fremderregten bzw. hybriderregten elektrischen Maschinen wird das Erregermagnetfeld ganz bzw. teilweise durch eine Bestromung einer statorseitig angeordneten Erregerwicklung erzeugt. Der durch die Erregerwicklung fließende Strom wird dabei geregelt, so dass im Betrieb das Erregermagnetfeld auf einen vorbestimmten Betriebspunkt der elektrischen Maschine eingestellt werden kann. Weiterhin ist es zur gezielten Ansteuerung der elektrischen Maschine notwendig, die Phasenströme durch die einzelnen Phasenstränge der Statorwicklung zu erfassen, um so die elektrische Maschine in geeigneter Weise betriebspunktabhängig zur Bereitstellung eines gewünschten Antriebsmomentes (oder eines gewünschten Stellwinkels oder einer gewünschten Leistung) ansteuern zu können.

Zur Messung des Erregerstroms ist bislang im Erregerkreis zusätzlich zu einer Phasenstrommesseinrichtung eine Erregerstrommesseinrichtung vorgesehen, um den Erregerstrom zu messen. Diese zusätzliche Erregerstrommesseinrichtung erhöht den konstruktiven Aufwand und es ist wünschenswert, die Anzahl der Strommesseinrichtungen in einer fremderregten bzw. hybriderregten elektrischen Maschine zu reduzieren.

Es ist daher Aufgabe der vorliegenden Erfindung, ein Verfahren und eine Vorrichtung zum Messen des Erregerstroms und der Phasenströme in einer elektrischen Maschine mit elektrischer Erregung zur Verfügung zu stellen, bei denen die Anzahl der Strommesseinrichtungen reduziert ist.

Offenbarung der Erfindung

Die obige Aufgabe wird durch das Verfahren zur Strommessung eines Erregerstroms und eines Phasenstroms in einer fremderregten bzw. hybriderregten elektrischen Maschine gemäß Anspruch 1 sowie durch die Vorrichtung und das Motorsystem gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Verfahren zum Bestimmen einer Erregerstromangabe für den Erregerstrom durch eine Erregerwicklung und von Phasenstromangaben für die Phasenströme durch Phasenstränge einer elektrisch erregten elektrischen Maschine mit einer Strommesseinrichtung in einer Versorgungsleitung für die Phasenstränge und die Erregerwicklung vorgesehen. Das Verfahren umfasst die folgenden Schritte:

- mehrfaches Messen eines Messstroms, der der Summe eines oder mehrerer der Phasenströme und/oder des Erregerstroms bei verschiedenen Bestromungszuständen entspricht, um eine Messstromangabe zu erhalten, wobei die Bestromungszustände durch Schaltmuster vorgegeben werden, die angeben, welche der Phasenstränge und der Erregerwicklung zu einem bestimmten Zeitpunkt bestromt werden;
- Bereitstellen eines bestimmten Gleichungssystems mit mehreren Gleichungen anhand einer Strombilanz an der Strommesseinrichtung bei verschiedenen Bestromungszuständen;
- Bestimmen der Erregerstromangabe und der Phasenstromangaben durch Lösen des Gleichungssystems.

Eine Idee des obigen Verfahrens besteht darin, mithilfe einer einzigen in der Versorgungsleitung angeordneten Strommesseinrichtung in geeigneter Weise mehrere Strommessungen vorzunehmen, während einer oder mehrere Phasenstränge und/oder die Erregerwicklung direkt, z. B. über einen Inverterzweig einer zum Ansteuern der Phasenstränge und der Erregerwicklung verwendeten Inverterschaltung, über die Versorgungsleitung bestromt werden. Die Treiberschaltungen für die elektrische Maschine und den Erregerkreis werden dazu nacheinander so angesteuert, dass der Stromfluss durch einen genau definierten Pfad fließt, wobei zur Ermittlung der Phasenströme und des Erregerstroms mehrere aufeinander folgende Bestromungszustände gewählt werden.

Die Bestromungszustände definieren verschiedene Kombinationen von bestromten Strompfaden durch die Phasenstränge und durch den Erregerkreis, wobei jeweils eine Messung eines Summenstroms, der der Summe der einzelnen Phasenströme und des Erregerstroms bei dem jeweiligen Schaltzustand entspricht, so vorgenommen wird, dass Stromangaben zu den einzelnen Phasenströmen und zu dem Erregerstrom durch ein bestimmtes Gleichungssystem ermittelt werden können. Beispielsweise kann gemäß einem ersten Schaltzustand der Bestromungszustand, der gemäß dem Kommutierungsschema zur Ansteuerung der Treiberschaltung und der Erregerschaltung ausgewählt ist, so modifiziert werden, dass nur ein Strom durch einen Phasenstrang durch die gemeinsame Strommesseinrichtung gemessen wird. Bei einem nächsten Schaltzustand kann dann zusätzlich ein weiterer Phasenstrang mit der Strommesseinrichtung oder der Erregerkreis mit der Strommesseinrichtung verbunden werden, usw. Im Prinzip ist vorgesehen, die Bestromungszustände so auszuwählen, dass sich die Ströme durch jeden Phasenstrang und durch den Erregerkreis durch Lösung eines bestimmten Gleichungssystems ermitteln lassen.

Das obige Verfahren hat den Vorteil, dass Motorsteuergeräte und Treiberschaltungen von bekannten Motortypen verwendet werden können, da das Strommessverfahren lediglich eine bestimmte Ansteuerung von Halbleiterschaltern einer die Phasenstränge ansteuernden Treiberschaltung bzw. einer die Erregerwicklung ansteuernden Erregerschaltung vorsieht. Auch ist der Aufwand zur Durchführung der Strommessung reduziert, da im Gegensatz zum Stand der Technik nur eine Strommesseinrichtung verwendet werden muss.

Weiterhin kann die Anzahl der Messungen des Messstroms der Anzahl der Phasenstränge der elektrischen Maschine entsprechen.

Gemäß einer Ausführungsform können die Phasenstränge der elektrischen Maschine in Sternschaltung verschaltet sein und die Strombilanz an einem Stempunkt der Sternschaltung kann als eine Gleichung des bestimmten Gleichungssystems verwendet werden.

Jede der mehreren Gleichungen kann die Summe der Phasenströme in den Phasensträngen, die über eine Treiberschaltung direkt, insbesondere über einen geschlossenen Inverterzweig einer Inverterschaltung, mit der Versorgungsleitung, in der die Strommesseinrichtung angeordnet ist, verbunden sind, und des Erregerstroms in der Erregerwicklung dem Messstrom in einem bestimmten Bestromungszustand zuordnen.

Es kann vorgesehen sein, dass sich die verschiedenen Bestromungszustände durch die Auswahl derjenigen Phasenstränge unterscheiden, die über eine Treiberschaltung direkt, insbesondere über einen geschlossenen Inverterzweig einer Inverterschaltung, mit der Versorgungsleitung, in der die Strommesseinrichtung angeordnet ist, verbunden sind.

Weiterhin können die Bestromungszustände durch ein vorgegebenes Kommutierungschema definiert sein.

Das Kommutierungschema kann nacheinander anzulegende Schaltmuster angeben, wobei zwei der Bestromungszustände zwei aufeinanderfolgend angelegten Schaltmustern entsprechen.

Die Bestromungszustände können weiterhin durch eine pulsweitenmodulierte Ansteuerung vorgegeben sein.

Insbesondere kann die pulsweitenmodulierte Ansteuerung während eines Zyklus einen Einschaltzustand, in dem einer oder mehrere Phasenstränge und/oder die Erregerwicklung direkt mit der Versorgungsleitung, in der die Strommesseinrichtung angeordnet ist, verbunden sind, und einen Ausschaltzustand, in dem einer oder mehrere Phasenstränge und/oder die Erregerwicklung von der Versorgungsleitung, in der die Strommesseinrichtung angeordnet ist, getrennt sind, vorgeben, wobei einer der Bestromungszustände dem Einschaltzustand entspricht und ein weiterer Bestromungszustand einem vorgegebenen Schaltzustand entspricht, der während eines Ausschaltzustands im gleichen Zyklus oder in einem der nachfolgenden Zyklen eingestellt wird.

Gemäß einem weiteren Aspekt ist eine Vorrichtung zum Bestimmen einer Erregerstromangabe für den Erregerstrom durch eine Erregerwicklung und von Phasenstromangaben für die Phasenströme durch Phasenstränge einer elektrisch erregten elektrischen Maschine vorgesehen. Die Vorrichtung umfasst:

- eine Strommesseinrichtung in einer Versorgungsleitung für die Phasenstränge und die Erregerwicklung, und
- eine Steuereinheit, die ausgebildet ist, um

  einen Messstrom, der der Summe eines oder mehrerer der Phasenströme und/oder des Erregerstroms bei verschiedenen Bestromungszuständen entspricht, mehrfach zu messen, um eine Messstromangabe zu erhalten, wobei die Bestromungszustände durch Schaltmuster vorgegeben werden, die angeben, welcher der Phasenstränge und der Erregerwicklung zu einem bestimmten Zeitpunkt bestromt werden; ein bestimmtes Gleichungssystem mit mehreren Gleichungen anhand einer Strombilanz an der Strommesseinrichtung bei verschiedenen Bestromungszuständen bereitzustellen; und die Erregerstromangabe und die Phasenstromangaben durch Lösen des Gleichungssystems zu bestimmen.

Gemäß einem weiteren Aspekt ist ein Motorsystem vorgesehen. Das Motorsystem umfasst:

- eine elektrisch erregte elektrische Maschine;
- eine Treiberschaltung zum Ansteuern von Phasensträngen der elektrischen Maschine;
- eine Erregerschaltung zum Ansteuern einer Erregerwicklung der elektrischen Maschine; und
- die obige Vorrichtung.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1   ein Schaltbild eines Motorsystems einer fremderregten elektrischen Maschine gemäß einer Ausführungsform; und

Figur 2   ein Signaldiagramm zur Veranschaulichung der Ansteuersignale für die Treiberschaltung und die Erregerschaltung des Motorsystems der Figur 1 zur Messung der Teilströme.

Beschreibung von Ausführungsformen

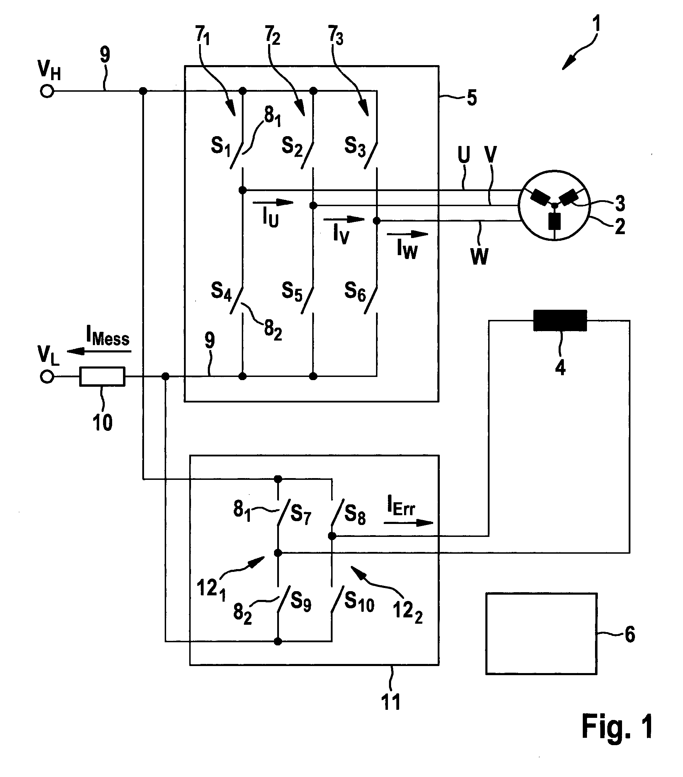

Figur 1 zeigt eine schematische Darstellung eines Motorsystems 1 mit einer elektrischen Maschine 2. Die elektrische Maschine 2 ist als fremderregte elektrische Maschine 2 ausgebildet und weist im vorliegenden Ausführungsbeispiel drei Phasenstränge 3 einer Statorwicklung und eine Erregerwicklung 4 auf, die zum Einprägen eines magnetisches Feldes in einem (nicht dargestellten) Rotor der elektrischen Maschine 2 dient.

Die Phasenstränge 3 werden über Phasenleitungen U, V, W bestromt, wobei die Bestromung durch Schaltmuster entsprechend einem Kommutierungsschema erfolgt.

Die Kommutierung der elektrischen Maschine 2 kann mithilfe einer Treiberschaltung 5 und einer Steuereinheit 6 durchgeführt werden. Die Treiberschaltung 5 ist beispielsweise als B6-Schaltung ausgebildet und weist eine erste, eine zweite und eine dritte Inverterschaltung $7_1$, $7_2$, $7_3$ auf. Jede der Inverterschaltungen $7_1$, $7_2$, $7_3$, umfasst zwei Halbleiterschalter $8_1$, $8_2$, die in Reihe angeordnet sind, wobei ein erster der Halbleiterschalter $8_1$ zwischen einem hohen Versorgungsspannungspotential $V_H$ und einer zugeordneten der Phasenleitungen U, V, W und ein zweiter der Halbleiterschalter $8_2$ zwischen einem niedrigen Versorgungsspannungspotential $V_L$ und einer zugeordneten der Phasenleitungen U, V, W angeordnet sind. Die Versorgungsspannungspotentiale $V_H$, $V_L$ werden der Treiberschaltung 5 über Versorgungsspannungsleitungen 9 zugeführt.

Die Halbleiterschalter $8_1$, $8_2$ der Inverterschaltungen $7_1$, $7_2$, $7_3$ der Treiberschaltung 5 werden über ihre Gate-Anschlüsse durch die Steuereinheit 6 mithilfe von Steuersignalen $S_1$ bis $S_6$ angesteuert, wobei das erste und das zweite Steuersignal $S_1$, $S_2$ die Halbleiterschalter $8_1$, $8_2$ der ersten Inverterschaltung $7_1$, das dritte und das vierte Steuersignal $S_3$, $S_4$ die Halbleiterschalter $8_1$, $8_2$ der zweiten Inverterschaltung $7_2$ und das fünfte und das sechste Steuersignal $S_5$, $S_6$ die Halbleiterschalter $8_1$, $8_2$ der dritten Inverterschaltung $7_3$ ansteuern.

Das Kommutierungsschema wird durch die Steuereinheit 6 umgesetzt, indem Schaltmuster für die Halbleiterschalter $8_1$, $8_2$ in einer zeitlichen Abfolge, die von einer Drehzahl der elektrischen Maschine 2 abhängt, angelegt werden. Anstatt von der Drehzahl können die Schaltmuster auch von dem bereitgestellten Moment oder der Leistung abhängen. Das Kommutierungsschema kann einer Sinuskommutierung, einer Blockkommutierung oder einer sonstigen Kommutierungsart entsprechen. Ein gängiges Kommutierungsschema besteht darin, eine Abfolge von Schaltmustern vorzusehen, bei denen ein Strompfad durch die Statorwicklung zu jedem Zeitpunkt nur durch zwei der Phasenstränge 3 gebildet wird. Dazu werden einer der mit der Versorgungsspannungsleitung 9 für das hohe Versorgungsspannungspotential $V_H$ verbundenen Halbleiterschalter $8_1$ einer der Inverterschaltungen $7_1$, $7_2$, $7_3$ sowie einer der mit der Versorgungsspannungsleitung 9 für das niedrige Versorgungsspannungspotential $V_L$ verbundenen Halbleiterschalter $8_2$ einer weiteren der Inverterschaltungen $7_1$, $7_2$, $7_3$ geschlossen, während die übrigen Halbleiterschalter $8_1$, $8_2$ der Inverterschaltungen $7_1$, $7_2$, $7_3$ geöffnet sind. Die dadurch bestromten Phasenstränge 3 definieren die Richtung eines durch die Statorwicklung erzeugten magnetischen Statorfelds, so dass sich das durch den Rotor ausgebildete Erregermagnetfeld in entsprechender Weise an dem Statormagnetfeld ausrichtet und dadurch ein Drehmoment generiert. Abhängig von der Lage des Rotors der elektrischen Maschine 2 werden die Schaltmuster durch die Steuereinheit 6 entsprechend dem Kommutierungsschema geändert.

Um verschiedene Drehmomente bzw. Drehzahlen der elektrischen Maschine 2 hervorzurufen, können die Schaltzustände der Schaltmuster noch pulsweitenmoduliert sein, so dass effektiv nicht die gesamte Klemmenspannung zwischen dem hohen Versorgungsspannungspotential $V_H$ und dem niedrigen Versorgungsspannungspotential $V_L$ an die Phasenanschlüsse der elektrischen Maschine 2 angelegt wird, sondern eine Zwischenspannung, die sich aus einem Tastverhältnis einer Pulsweitenmodulation ergibt. Ist beispielsweise durch ein Schaltmuster bestimmt, dass der erste Halbleiterschalter $8_1$ der ersten Inverterschaltung $7_1$ und der zweite Halbleiterschalter $8_2$ der zweiten Inverterschaltung $7_2$ geschlossen und alle übrigen Halbleiterschalter $8_1$, $8_2$ geöffnet sind, so wird ein Strompfad durch die Phasenleitungen U und V gebildet. Werden diese Schaltzustände pulsweitenmoduliert, so wird zwischen einem geöffneten und einem geschlossenen Zustand des ersten Halbleiterschalters $8_1$ der ersten Inverterschaltung $7_1$ und des zweiten Halbleiterschalters $8_2$ der zweiten Inverterschaltung $7_2$ zyklisch umgeschaltet, wobei das verwendete Tastverhältnis, d. h. das Verhältnis zwischen der Dauer des Zustands, während der ein Halbleiterschalter $8_1$, $8_2$ geschlossen ist, und der gesamten Zyklusdauer, die Höhe der an die entsprechenden Phasenleitungen angelegten Phasenspannung bestimmt.

Zum Betrieb der elektrischen Maschine 2 ist es notwendig, die Phasenströme zu kennen und insbesondere eine Regelung für die Phasenströme durchzuführen, da die Phasenströme direkt das von der elektrischen Maschine 2 bereitgestellte Drehmoment angeben. Dazu ist es notwendig, die Phasenströme im einzelnen zu bestimmen, damit eine entsprechende Stromregelung, die in der Steuereinheit 6 ausgeführt wird, das Tastverhältnis zur pulsweitenmodulierten Ansteuerung der Halbleiterschalter $8_1$, $8_2$ entsprechend regeln kann. Dazu ist eine Strommesseinrichtung 10 in einer der Versorgungsspannungsleitungen 9 vorgesehen, im gezeigten Ausführungsbeispiel in der Versorgungsspannungsleitung 9, an die das niedrige Versorgungsspannungspotential $V_L$ angelegt ist.

Die Strommesseinrichtung 10 kann beispielsweise als Messwiderstand in Form eines Shunts ausgeführt werden, wobei die über dem Messwiderstand abfallende Messspannung dem durch die Strommesseinrichtung fließenden Strom entspricht. Die Messspannung kann beispielsweise mithilfe eines in der Steuereinheit 6 implementierten Analog-Digital-Wandlers erfasst werden. Es sind auch andere Arten von Strommesseinrichtungen denkbar.

Die elektrische Maschine 2 weist weiterhin eine Erregerschaltung 11 auf, die die Erregerwicklung 4 bestromt. Die Erregerschaltung 11 ist, wie die Treiberschaltung 5, mit den Versorgungsspannungsleitungen 9 verbunden und weist eine erste und eine zweite weitere Inverterschaltung $12_1$, $12_2$ mit jeweils zwei in Reihe geschalteten Halbleiterschaltern $8_1$ bis $8_2$ auf. Die Halbleiterschalter $8_1$ bis $8_2$ der weiteren Inverterschaltungen $12_1$, $12_2$ werden durch entsprechende Steuersignale $S_7$ bis $S_{10}$ durch die Steuereinheit 6 angesteuert und dienen zum Einstellen des Erregerstroms durch die Erregerwicklung 4 und damit zum Einstellen der Stärke des Erregermagnetfelds, das von dem Rotor der elektrischen Maschine 2 bereitgestellt wird. Die Erregerschaltung 11 ist in dieser Konstellation als H-Brückenschaltung ausgebildet und somit dazu in der Lage, verschiedene Spannungspolaritäten für verschiedene Stromrichtungen durch die Erregerwicklung 4 zu erzeugen, je nachdem, ob der Halbleiterschalter $8_1$ der ersten Inverterschaltung $12_1$ und der Halbleiterschalter $8_2$ der zweiten Inverterschaltung $12_2$ oder der Halbleiterschalter $8_2$ der ersten Inverterschaltung $12_1$ und der Halbleiterschalter $8_1$ der zweiten Inverterschaltung $12_2$ entsprechend angesteuert werden, während die übrigen Halbleiterschalter $8_1$, $8_2$ jeweils geöffnet sind.

Zum Einstellen des Erregerstroms kann auch für die Ansteuerung der Halbleiterschalter der Erregerschaltung 11 eine pulsweitenmodulierte Ansteuerung vorgesehen sein, wobei sich die Höhe des Erregerstroms über das gewählte Tastverhältnis einstellen lässt.

Zum Betreiben der elektrischen Maschine 2 ist es neben der Kenntnis der Höhe der Phasenströme auch notwendig, die Höhe des Erregerstroms durch die Erregerwicklung 4 zu kennen, um stets eine Rückmeldung über das vom Rotor bereitgestellte Erregermagnetfeld zur Verfügung zu haben.

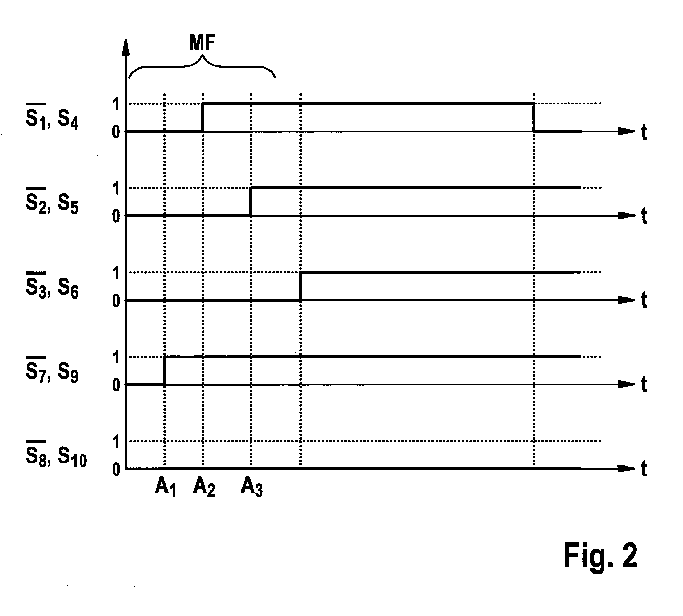

In Figur 2 ist ein Signaldiagramm dargestellt, das den Verlauf von Steuersignalen $S_1$ bis $S_{10}$ innerhalb eines Messzeitfensters MF darstellt. Um einen Kurzschlusspfad durch die Inverterschaltungen $7_1$, $7_2$, $7_3$, $12_1$, $12_2$ zu vermeiden, sind die Steuersignale zum Ansteuern der Halbleiterschalter $8_1$, $8_2$ derselben Inverterschaltungen $7_1$, $7_2$, $7_3$, $12_1$, $12_2$ invertiert zueinander. Innerhalb des Messzeitfensters MF werden kurzzeitig verschiedene Bestromungszustände $A_1$, $A_2$, $A_3$ angelegt, bei denen jeweils eine oder mehrere direkt mit der Versorgungsspannungsleitung 9 verbundene Halbleiterschalter $8_1$, $8_2$ geschlossen sind. Dabei muss sichergestellt sein, dass zur Gewährleistung eines Stromflusses mindestens einer der ersten Halbleiterschalter $8_1$ der Treiberschaltung 5 und/oder der Erregerschaltung 11, die mit der Versorgungsspannungsleitung 9 für das hohe Versorgungsspannungspotential $V_H$ direkt verbunden sind, und mindestens einer der zweiten Halbleiterschalter $8_1$ der Treiberschaltung 5 bzw. der Erregerschaltung 11, die mit der Versorgungsspannungsleitung 9 für das niedrige Versorgungsspannungspotential $V_L$ direkt verbunden sind, geschlossen sind, um einen geschlossenen Stromkreis durch die Phasenstränge 3 und/oder die Erregerwicklung 4 zu bilden. Auf diese Weise fließt durch die Strommesseinrichtung 10 ein Summenstrom, der sich als Summe der Teilströme durch einen oder mehrere der Phasenstränge 3 und/oder durch die Erregerwicklung 4 ergibt.

Im gezeigten Ausführungsbeispiel wird eine Anzahl von Messungen dieser Art bei verschiedenen Bestromungszuständen vorgenommen, bei denen jeweils verschiedene Kombinationen von Phasensträngen 3 und der Erregerwicklung 4 in einem entsprechenden Stromkreis geschaltet werden, um so in der Strommesseinrichtung 10 einen Strom gemäß dem angelegten Bestromungszustand zu erhalten. Aus den erhaltenen Stromgrößen kann ein Gleichungssystem mit einer Anzahl von Unbekannten, im gezeigten Ausführungsbeispiel vier, gelöst werden, sobald die Anzahl der ermittelten Stromgrößen der um eins verringerten Anzahl der zu ermittelnden Teilströme entspricht. Im vorliegenden Fall sind drei Phasenströme $I_U$, $I_V$, $I_W$ und ein Erregerstrom $I_{Err}$ zu ermitteln, so dass die Anzahl der zu messenden Stromgrößen $I_{Mess}$ drei beträgt. Bei der Auswahl der Messschaltzustände ist lediglich dafür zu sorgen, dass kein Bestromungszustand doppelt vorliegt und dass alle Halbleiterschalter $8_1$, $8_2$, die mit der Versorgungsspannungsleitung 9, in der die Strommesseinrichtung 10 angeordnet ist, direkt verbunden sind (d.h. Halbleiterschalter des mit der betreffenden Versorgungsleitung verbundenen Inverterzweigs, mindestens einmal in den entsprechend Messstromkreis geschaltet werden. Beispielsweise kann durch entsprechende Messungen bei verschiedenen Schaltzuständen folgendes Gleichungssystem aufgestellt werden:

$$I_{Err} = I_{Mess}$$

$$-I_{Mess} - I_{Err} = I_U$$

$$- I_U - I_{Mess} - I_{Err} = I_V$$

In Verbindung mit der Summenregel:

$$- I_U - I_V = I_W$$

lassen sich die unbekannten drei Phasenströme $I_U$, $I_V$, $I_W$ und der Erregerstrom $I_{Err}$ ermitteln.

Die Messungen erfolgen während des Messzeitfensters MF, das in das Kommutierungschema und in die herkömmliche pulsweitenmodulierte Ansteuerung der Halbleiterschalter $8_1$, $8_2$ integriert wird. Dazu wird kurzzeitig von dem Schema der pulsweitenmodulierten Ansteuerung abgewichen und es werden vorzugsweise Flanken der Steuersignale $S_1$ bis $S_{10}$ genutzt, um die zur Strommessung benötigten verschiedenen Bestromungszustände zu erreichen. Ein kurzzeitiges Bestromen eines Phasenstranges außerhalb des Kommutierungsschemas und des durch die pulsweitenmodulierte Ansteuerung vorgegebenen Schaltschemas zum Durchführen der Strommessung bleibt in der Praxis im Betrieb der elektrischen Maschine 2 weitgehend unbemerkt, so dass die Strommessung ohne wesentliche Auswirkungen auf den Betrieb durchgeführt werden kann. Der Einfluss der kurzzeitigen Änderung des Schaltmusters wird aufgrund der gleichrichtenden Stromeigenschaft der elektrischen Maschine 2 aufgrund der Induktivität der Phasenstränge für den kurzen Moment der Strommessung dazu führen, dass der Strom quasi konstant ist.

Aufgrund stark differierender Induktivitätsverhältnisse der Phasenstränge 3 und der Erregerwicklung 4 können aus Effizienzgründen Kombinationen aus mehreren Schaltszenarien realisiert werden. So ist es sinnvoll, die Ermittlung des Erregerstroms im Wechsel mit einer Ermittlung lediglich der Phasenströme anzuwenden, da der Erregerstrom eine größere Zeitkonstante als die Phasenströme besitzt. So können Zeitintervalle und Verlustleistungen optimiert werden.

Alternativ kann das obige Verfahren auch auf andere Verbraucher erweitert werden.

Das Anlegen der Bestromungszustände kann in geeigneter Weise an die zum Betreiben der elektrischen Maschine anzulegenden Schaltmuster angepasst werden. So kann die Ausschaltphase eines Zyklus der pulsweitenmodulierten Ansteuerung dazu genutzt werden, einen weiteren Strompfad bzw. weitere Strompfade einzuschalten, um so eine Messung der Teilströme durchzuführen. Insbesondere besteht bei einem Wechsel eines Schaltmusters durch die Vorgabe des Kommutierungsschemas innerhalb von zwei Zyklen der Pulsweitenmodulation die Möglichkeit zu vier Einzelmessungen, die zum Bestimmen des Erregerstroms und der Phasenströme einer dreiphasigen elektrischen Maschine ausreichen.

**Patentansprüche**

1.  Verfahren zum Bestimmen einer Erregerstromangabe für den Erregerstrom ($I_{Err}$) durch eine Erregerwicklung (4) und von Phasenstromangaben für die Phasenströme ($I_U$, $I_V$, $I_W$) durch Phasenstränge (3) einer elektrisch erregten elektrischen Maschine (2) mit einer Strommesseinrichtung (10) in einer Versorgungsleitung (9) für die Phasenstränge (3) und die Erregerwicklung (4), mit folgenden Schritten:

    - mehrfaches Messen eines Messstroms, der der Summe eines oder mehrerer der Phasenströme ($I_U$, $I_V$, $I_W$) und/oder des Erregerstroms ($I_{Err}$) bei verschiedenen Bestromungszuständen entspricht, um eine Messstromangabe zu erhalten, wobei die Bestromungszustände durch Schaltmuster vorgegeben werden, die angeben, welcher der Phasenstränge (3) und der Erregerwicklung (4) zu einem bestimmten Zeitpunkt bestromt werden;
    - Bereitstellen eines bestimmten Gleichungssystems mit mehreren Gleichungen anhand einer Strombilanz an der Strommesseinrichtung (10) bei verschiedenen Bestromungszuständen;
    - Bestimmen der Erregerstromangabe und der Phasenstromangaben durch Lösen des Gleichungssystems.

2.  Verfahren nach Anspruch 1, wobei die Anzahl der Messungen des Messstroms der Anzahl der Phasenstränge (3) der elektrischen Maschine (2) entspricht.

3.  Verfahren nach Anspruch 1 oder 2, wobei die Phasenstränge (3) der elektrischen Maschine (2) in Sternschaltung verschaltet sind und die Strombilanz an einem Sternpunkt der Sternschaltung als eine Gleichung des bestimmten Gleichungssystems verwendet wird.

4.  Verfahren nach Anspruch 1 oder 2, wobei die Phasenstränge (3) der elektrischen Maschine (2) in Dreieckschaltung verschaltet sind und eine Strombilanz der Sternschaltung als eine Gleichung des bestimmten Gleichungssystems verwendet wird.

5.  Verfahren nach einem der Ansprüche 1 bis 4, wobei jede der mehreren Gleichungen die Summe der Phasenströme ($I_U$, $I_V$, $I_W$) in den Phasensträngen (3), die über eine Treiberschaltung (5) direkt, insbesondere über einen geschlossenen Inverterzweig einer Inverterschaltung ($7_1$, $7_2$, $7_3$, $12_1$, $12_2$), mit der Versorgungsleitung, in der die Strommesseinrichtung (10) angeordnet ist, verbunden sind, und des Erregerstroms ($I_{Err}$) in der Erregerwicklung dem Messstrom in einem bestimmten Bestromungszustand zuordnet.

6.  Verfahren nach einem der Ansprüche 1 bis 5, wobei sich die verschiedenen Bestromungszustände durch die Auswahl derjenigen Phasenstränge (3) unterscheiden, die über eine Treiberschaltung (5) direkt, insbesondere über einen geschlossenen Inverterzweig ($7_1$, $7_2$, $7_3$, $12_1$, $12_2$) einer Inverterschaltung, mit der Versorgungsleitung (9), in der die Strommesseinrichtung (10) angeordnet ist, verbunden sind.

7.  Verfahren nach Anspruch 6, wobei die Bestromungszustände durch ein vorgegebenes Kommutierungschema definiert sind.

**8.** Verfahren nach Anspruch 7, wobei das Kommutierungschema nacheinander anzulegende Schaltmuster angibt, wobei zwei der Bestromungszustände zwei aufeinanderfolgend angelegten Schaltmustern entsprechen.

**9.** Verfahren nach einem der Ansprüche 6 bis 8, wobei die Bestromungszustände durch eine pulsweitenmodulierte Ansteuerung vorgegeben sind.

**10.** Verfahren nach Anspruch 9, wobei die pulsweitenmodulierte Ansteuerung während eines Zyklus einen Einschaltzustand, in dem einer oder mehrere Phasenstränge (3) und/oder die Erregerwicklung (4) direkt mit der Versorgungsleitung, in der die Strommesseinrichtung (10) angeordnet ist, verbunden sind, und einen Ausschaltzustand, in dem einer oder mehrere Phasenstränge (3) und/oder die Erregerwicklung (4) von der Versorgungsleitung (9), in der die Strommesseinrichtung (10) angeordnet ist, getrennt sind, vorgibt, wobei einer der Bestromungszustände dem Einschaltzustand entspricht und ein weiterer Bestromungszustand einem vorgegebenen Schaltzustand entspricht, der während eines Ausschaltzustands im gleichen Zyklus oder in einem der nachfolgenden Zyklen eingestellt wird.

**11.** Vorrichtung zum Bestimmen einer Erregerstromangabe für den Erregerstrom durch eine Erregerwicklung (4) und von Phasenstromangaben für die Phasenströme durch Phasenstränge (3) einer elektrisch erregten elektrischen Maschine (2), umfassend:

- eine Strommesseinrichtung (10) in einer Versorgungsleitung (9) für die Phasenstränge (3) und die Erregerwicklung (4),
- eine Steuereinheit (6), die ausgebildet ist, um

· einen Messstrom, der der Summe eines oder mehrerer der Phasenströme ($I_U$, $I_V$, $I_W$) und/oder des Erregerstroms ($I_{Err}$) bei verschiedenen Bestromungszuständen entspricht, mehrfach zu messen, um eine Messstromangabe zu erhalten, wobei die Bestromungszustände durch Schaltmuster vorgegeben werden, die angeben, welcher der Phasenstränge (3) und der Erregerwicklung (4) zu einem bestimmten Zeitpunkt bestromt werden;
· ein bestimmtes Gleichungssystem mit mehreren Gleichungen anhand einer Strombilanz an der Strommesseinrichtung (10) bei verschiedenen Bestromungszuständen bereitzustellen;
· die Erregerstromangabe und die Phasenstromangaben durch Lösen des Gleichungssystems zu bestimmen.

**12.** Motorsystem (1), umfassend:

- eine elektrisch erregte elektrische Maschine (2);
- eine Treiberschaltung zum Ansteuern von Phasensträngen (3) der elektrischen Maschine (2);
- eine Erregerschaltung zum Ansteuern einer Erregerwicklung (4) der elektrischen Maschine (2);
- die Vorrichtung nach Anspruch 11.

**Claims**

**1.** Method for determining field current information for the field current ($I_{field}$) through a field winding (4) and phase current information for the phase currents ($I_U$, $I_V$, $I_W$) through winding phases (3) of an electrically excited electrical machine (2) comprising a current-measuring device (10) in a supply line (9) for the winding phases (3) and the field winding (4), said method comprising the following steps:

- measuring, a plurality of times, a measurement current which corresponds to the sum of one or more of the phase currents ($I_U$, $I_V$, $I_W$) and/or the field current ($I_{field}$) in different energization states in order to obtain measurement current information, wherein the energization states are preset by switching patterns which specify which of the winding phases (3) and the field winding (4) are energized at a specific point in time;
- providing a specific system of equations comprising a plurality of equations on the basis of a total current at the current measuring device (10) in different energization states;
- determining the field current information and the phase current information by solving the system of equations.

**2.** Method according to Claim 1, wherein the number of measurements of the measurement current corresponds to the number of winding phases (3) of the electrical machine (2).

**3.** Method according to Claim 1 or 2, wherein the winding phases (3) of the electrical machine (2) are star-connected, and the total current at a neutral point of the star connection is used as an equation in the specific system of equations.

**4.** Method according to Claim 1 or 2, wherein the winding phases (3) of the electrical machine (2) are delta-connected, and a total current of the star connection is used as an equation in the specific system of equations.

**5.** Method according to one of Claims 1 to 4, wherein each of the plurality of equations assigns the sum of the phase currents ($I_U$, $I_V$, $I_W$) in the winding phases (3) which are connected via a driver circuit (5) directly, in particular via a closed inverter branch of an inverter circuit ($7_1$, $7_2$, $7_3$, $12_1$, $12_2$), to the supply line in which the current-measuring device (10) is arranged, and the field current ($I_{field}$) in the field winding to the measurement current in a specific energization state.

**6.** Method according to one of Claims 1 to 5, wherein the various energization states differ from one another by the selection of the winding phases (3) which are connected via a driver circuit (5) directly, in particular via a closed inverter branch ($7_1$, $7_2$, $7_3$, $12_1$, $12_2$) of an inverter circuit, to the supply line (9) in which the current-measuring device (10) is arranged.

**7.** Method according to Claim 6, wherein the energization states are defined by a preset commutation scheme.

**8.** Method according to Claim 7, wherein the commutation scheme specifies switching patterns to be applied successively, wherein two of the energization states correspond to two successively applied switching patterns.

**9.** Method according to one of Claims 6 to 8, wherein the energization states are preset by pulse-width-modulated actuation.

**10.** Method according to Claim 9, wherein the pulse-width-modulated actuation, during one cycle, presets a switch-on state, in which one or more winding phases (3) and/or the field winding (4) are connected directly to the supply line in which the current-measuring device (10) is arranged, and a switch-off state, in which one or more winding phases (3) and/or the field winding (4) are isolated from the supply line (9) in which the current-measuring device (10) is arranged, wherein one of the energization states corresponds to the switch-on state and a further energization state corresponds to a preset switching state, which is set during a switch-off state in the same cycle or in one of the following cycles.

**11.** Apparatus for determining field current information for the field current through a field winding (4) and phase current information for the phase currents through winding phases (3) of an electrically excited electrical machine (2), said apparatus comprising:

- a current-measuring device (10) in a supply line (9) for the winding phases (3) and the field winding (4),

- a control unit (6), which is designed

· to measure, a plurality of times, a measurement current, which corresponds to the sum of one or more of the phase currents ($I_U$, $I_V$, $I_W$) and/or the field current ($I_{field}$) in various energization states in order to obtain measurement current information, wherein the energizatino states are preset by switching patterns which specify which of the winding phases (3) and the field winding (4) are energized at a specific point in time;
· to provide a specific system of equations comprising a plurality of equations on the basis of a total current at the current-measuring device (10) in various energization states;
· to determine the field current information and the phase current information by solving the system of equations.

**12.** Motor system (1), comprising:

- an electrically excited electrical machine (2);
- a driver circuit for actuating winding phases (3) of the electrical machine (2);
- a field circuit for actuating a field winding (4) of the electrical machine (2);
- the apparatus according to Claim 11.

**Revendications**

**1.** Procédé de détermination d'une indication de courant d'excitation pour le courant d'excitation ($I_{Err}$) à travers un enroulement d'excitation (4) et d'indications de courant de phase pour les courants de phase ($I_U$, $I_V$, $I_W$) à travers les conducteurs de phase (3) d'une machine électrique (2) excitée électriquement avec un dispositif de mesure de courant (10) dans une ligne d'alimentation (9) pour les conducteurs de phase (3) et l'enroulement d'excitation (4), comprenant les étapes suivantes :

- mesure multiple d'un courant de mesure qui correspond à la somme d'un ou de plusieurs des courants de phase ($I_U$, $I_V$, $I_W$) et/ou du courant d'excitation ($I_{Err}$) à différents états d'alimentation électrique afin d'obtenir une indication de courant de mesure, les états d'alimentation électrique étant prédéfinis par des modèles de commutation qui indiquent lequel des conducteurs de phase (3) et de l'enroulement d'excitation (4) sont alimentés électriquement à un instant donné ;
- fourniture d'un système d'équations donné comprenant plusieurs équations à l'aide d'un bilan de courant au dispositif de mesure de courant (10) aux différents états d'alimentation électrique ;
- détermination de l'indication de courant d'excitation et des indications de courant de phase en résolvant le système d'équations.

2. Procédé selon la revendication 1, selon lequel le nombre de mesures du courant de mesure correspond au nombre de conducteurs de phase (3) de la machine électrique (2).

3. Procédé selon la revendication 1 ou 2, selon lequel les conducteurs de phase (3) de la machine électrique (2) sont connectés en un circuit en étoile et le bilan de courant à un point neutre du circuit en étoile est utilisé comme l'une des équations du système d'équations donné.

4. Procédé selon la revendication 1 ou 2, selon lequel les conducteurs de phase (3) de la machine électrique (2) sont connectés en un circuit en triangle et un bilan de courant du circuit en étoile est utilisé comme l'une des équations du système d'équations donné.

5. Procédé selon l'une des revendications 1 à 4, selon lequel chacune des plusieurs équations associe la somme des courants de phase ($I_U$, $I_V$, $I_W$) dans les conducteurs de phase (3), lesquels sont reliés directement par le biais d'un circuit de commande (5), notamment par le biais d'une branche d'onduleur fermée d'un circuit onduleur ($7_1$, $7_2$, $7_3$, $12_1$, $12_2$) à la ligne d'alimentation dans laquelle est disposé le dispositif de mesure de courant, et du courant d'excitation ($I_{Err}$) dans l'enroulement d'excitation au courant de mesure dans un état d'alimentation électrique donné.

6. Procédé selon l'une des revendications 1 à 5, selon lequel les différents états d'alimentation électrique se différencient par le choix des conducteurs de phase (3), lesquels sont reliés directement par le biais d'un circuit de commande (5), notamment par le biais d'une branche d'onduleur fermée ($7_1$, $7_2$, $7_3$, $12_1$, $12_2$) d'un circuit onduleur à la ligne d'alimentation (9) dans laquelle est disposé le dispositif de mesure de courant (10).

7. Procédé selon la revendication 6, selon lequel les états d'alimentation électrique sont définis par un schéma de commutation prédéfini.

8. Procédé selon la revendication 7, selon lequel le schéma de commutation indique des modèles de commutation à appliquer l'un après l'autre, deux des états d'alimentation électrique correspondant à deux modèles de commutation appliqués successivement.

9. Procédé selon l'une des revendications 6 à 8, selon lequel les états d'alimentation électrique sont prédéfinis par une excitation modulée en largeur d'impulsion.

10. Procédé selon la revendication 9, selon lequel l'excitation modulée en largeur d'impulsion définit pendant un cycle un état de mise en circuit, dans lequel un ou plusieurs conducteurs de phase (3) et/ou l'enroulement d'excitation (4) sont reliés directement à la ligne d'alimentation dans laquelle est disposé le dispositif de mesure de courant (10), et un état de mise hors circuit, dans lequel un ou plusieurs conducteurs de phase (3) et/ou l'enroulement d'excitation (4) sont déconnectés de la ligne d'alimentation (9) dans laquelle est disposé le dispositif de mesure de courant (10), l'un des états d'alimentation électrique correspondant à l'état de mise en circuit et un autre état d'alimentation électrique correspondant à un état de commutation prédéfini qui est établi pendant un état de mise hors circuit dans le même cycle ou dans l'un des cycles suivants.

11. Dispositif de détermination d'une indication de courant d'excitation pour le courant d'excitation à travers un enroulement d'excitation (4) et d'indications de courant de phase pour les courants de phase à travers les conducteurs de phase (3) d'une machine électrique (2) excitée électriquement, comprenant :

- un dispositif de mesure de courant (10) dans une ligne d'alimentation (9) pour les conducteurs de phase (3) et l'enroulement d'excitation (4),
- une unité de commande (6) qui est configurée pour
- mesurer plusieurs fois un courant de mesure qui correspond à la somme d'un ou de plusieurs des courants de phase ($I_U$, $I_V$, $I_W$) et/ou du courant d'excitation ($I_{Err}$) à différents états d'alimentation électrique afin d'obtenir une indication de courant de mesure, les états d'alimentation électrique étant prédéfinis par des modèles de commutation qui indiquent lequel des conducteurs de phase (3) et de l'enroulement d'excitation (4) sont alimentés électriquement à un instant donné ;
- fournir un système d'équations donné comprenant plusieurs équations à l'aide d'un bilan de courant au dispositif de mesure de courant (10) aux différents états d'alimentation électrique ;
- déterminer l'indication de courant d'excitation et les indications de courant de phase en résolvant le système d'équations.

12. Système de moteur (1) comprenant :

- une machine électrique (2) excitée électriquement ;
- un circuit de commande destiné à exciter les conducteurs de phase (3) de la machine électrique (2) ;
- un circuit d'excitation destiné à exciter un enroulement d'excitation (4) de la machine électrique (2) ;
- le dispositif selon la revendication 11.

**Fig. 1**

Fig. 2